Europäisches Patentamt

European Patent Office

Office européen des brevets

(19)

(11) Veröffentlichungsnummer: **0 006 160**
**B1**

(12) **EUROPÄISCHE PATENTSCHRIFT**

(45) Veröffentlichungstag der Patentschrift: **30.06.82**

(21) Anmeldenummer: **79101679.3**

(22) Anmeldetag: **31.05.79**

(51) Int. Cl.³: **G 01 B 5/24, B 23 Q 17/02, B 25 J 19/00**

(54) Einrichtung zur reproduzierbaren Zuordnung zweier mechanischer Elemente.

(30) Priorität: **10.06.78 DE 2825581**

(43) Veröffentlichungstag der Anmeldung:
**09.01.80 Patentblatt 80/1**

(45) Bekanntmachung des Hinweises auf die Patenterteilung:
**30.06.82 Patentblatt 82/26**

(84) Benannte Vertragsstaaten:
**DE FR GB IT SE**

(56) Entgegenhaltungen:
**FR - A - 919 740**
**GB - A - 957 930**
**US - A - 2 656 818**
**US - A - 3 807 050**
**US - A - 4 050 355**

(73) Patentinhaber: **INDUSTRIE-WERKE KARLSRUHE AUGSBURG Aktiengesellschaft Zweigniederlassung Keller & Knappich Zugspitzstrasse 140 D-8900 Augsburg (DE)**

(72) Erfinder: **Zimmer, Ernst, Ing. (grad.) Michael-Steinherr-Strasse 34 D-8904 Friedberg (DE)**

(74) Vertreter: **Ernicke, Hans-Dieter, Dipl.-Ing. Schwibbogenplatz 2b D-8900 Augsburg (DE)**

## Einrichtung zur reproduzierbaren Zuordnung zweier mechanischer Elemente

Die Erfindung bezieht sich auf eine Vorrichtung zur exakten und wiederholbaren Einstellung eines motorisch angetriebenen Gelenksystems, dessen einzelnen beweglichen Gelenkteilen ein steuerbares elektrisches Wegemeßsystem zugeordnet ist, wobei die Zuordnung relativ zueinander beweglicher und zusammengehöriger Gelenkteile in ihrer mechanischen Nullstellung markiert und die Nullstellung des elektrischen Wegemeßsystems darauf abgestellt ist, insbesondere bei einem Industrieroboter oder Handhabungsgerät.

Die für den speziellen Anwendungsfall genannten Industrieroboter oder Handhabungsgeräte führen über ein programmgesteuertes, elektromotorisch angetriebenes Gelenksystem bestimmte reproduzierbare Bewengungen aus. Die Größe der Bewegung einzelner Getriebegruppen wird über ein elektrisches Wegemeßsystem gesteuert und überwacht. Die Nullstellungen des Getriebesystems und der Wegemeßsysteme müssen übereinstimmen und bei Abweichungen wieder aufgefunden werden können. Muß zum Beispiel ein Wegemeßsystem ausgetauscht werden, dann kann dessen Einstellung an der wiederholbaren Nullstellung des Gelenksystems ausgerichtet werden. Damit erreicht man, daß jede andere Stellung der Mechanik mit der entsprechenden Stellung des Wegemeßsystems übereinstimmt und daß die zugehörige Programmsteuerung nicht korrigiert zu werden braucht.

Ein weiterer auf dem spezifischen Anwendungsgebiet Industrieroboter liegender Anwendungsfall betrifft den des Austausches eines solchen Handhabungsgerätes gegen ein anderes und zwar gegen ein solches, das vom gleichen Arbeitsprogramm gesteuert wird. In diesem Fall ist es notwendig, daß die mechanische und elektrische Nullstellung beider Einheiten übereinstimmen oder zumindest in einer definierten Beziehung zueinander stehen. Um das zu erreichen, muß bei der Erstmontage mittels einer besonderen Lehr- oder Meßvorrichtung die mechanische Nullstellung aller Achsen fixiert werden und außerdem müssen auch die Fertigungstoleranzen der Mechanik in bestimmten Grenzen liegen. Die Abweichungen vom ursprünglichen Programm, das mittels Lochstreifen oder Magnetband gespeichert ist und auf die Ersatzmaschine überspielt werden kann, dürgen über das ganze Arbeitsfeld betrachtet das für den jeweiligen Fall zulässige Maß nicht überschreiten.

Ein übliches Verfahren zur reproduzierbaren Einstellung z.B. einer sich drehenden Welle relativ zu einem Gehäuse, in dem die Welle gelagert ist, besteht darin, beide Teile mit je einer Paßbohrung zu versehen und diese in Übereinstimmung zu bringen. Durch Einführen eines Paßbolzens wird die Ubereinstimmung kontrolliert und fixiert.

Eine andere bekannte Möglichkeit ist, zwei sich gegenüberliegende Kerben oder Risse der relativ zueinander bewegbaren Teile ungefähr zum Fluchten zu bringen.

Mit diesen bekannten Verfahren kann die im Hinblick auf die mit den Industrierobotern zu erfüllenden Aufgaben erforderliche Genauigkeit im allgemeinen nicht erreicht werden. Ursache für die Ungenauigkeit ist im einen Fall das stets erforderliche Passungsspiel und im anderen Fall die Schwierigkeit, Risse oder Kerben mit der erforderlichen Genauigkeit zum Fluchten zu bringen.

Der Erfindung liegt die Aufgabe zugrunde, Mittel anzugeben, mit denen selbst bei komplizierten Gelenksystemen auf einfache Weise und stets wiederholbar eine exakte mechanische Nullstellung einzelner zusammengehöriger Gelenkteile eingestellt werden kann.

Das Wesen der Erfindung besteht darin, daß im beweglichen von zwei zusammengehörigen Gelenkteilen eine Vertiefung oder Erhöhung vorgesehen und im zugeordneten anderen Gelenkteil eine Führung für ein Feinmeß-Abtast-Instrument verstellbar und fixierbar angeordnet ist, dessen Abtastelement bei Relativbewegung beider Gelenkteile durch Feststellung des Minimum oder Maximums der Vertiefung bzw. Erhöhung die mechanische Nullstellung anzeigt.

Der Gegenstand der Erfindung bietet die Voraussetzung, einen bestimmten Punkt im Raum mit dem Gelenksystem exakt und wiederholbar anzusteuern, auch wenn Teile des Systems oder dieses insgesamt ausgetauscht werden müssen, weil die mechanische Nullstellung genau aufgefunden und die elektrische Nullstellung danach ausgerichtet werden kann. Eine solche Möglichkeit ist bisher unbekannt geblieben.

Es ist zwar bekannt (M. Pollermann, Bauelemente ... 1955, S. 116, 117), eine Welle gegenüber einem Lager in einer ungefähren Winkellage zu justieren, indem man die Welle auf zwei voneinander distanzierten Festellschrauben aufsitzen und mittels einer Kerbe an einem federnden Bolzen im Sinne einer Dreipunktauflage einrasten läßt. Dadurch lassen sich zwar Einstellungen in einer Ebene ungefähr erreichen, aber nicht die Probleme lösen, die im Zusammenhang mit der erfindungsgemäßen Aufgabe stehen.

Durch die DD—PS 77 631 ist es bekannt, die Drehbewegung einer Welle gegenüber einer Feststehenden Hülse über mehr als 360° ohne Zuhilfenahme eines Übersetzungsgetriebes genau begrenzen zu können, indem die Welle einen nach außen vorragenden Anschlag und die Hülse einen oder zwei nach innen vorragende Anschläge aufweist, zwischen denen eine Kugel als Zwischenelement zur Begrenzung der Anschlagstellung geführt ist. Auf diese Weise läßt sich ebenfalls kein exakter Nullstellungsvergleich von zwei unabhängig voneinander wirksamer Systeme erreichen.

Mit der DE—AS 1 180 144 wird schließlich eine Meßanordnung zur Feststellung der Breite und der Mittigkeit einer Keilnut offenbart, die zwar als Meßorgan eine Meßuhr aufweist, aber nicht geeignet ist, die Nullstellung eines Gelenksystems festzustellen. Mit diesem Stand der Technik werden nur einzelne Merkmale der Erfindung als bekannt nachgewiesen, ohne daß sich ein Zusammenhang mit der Aufgabe und Lösung der Erfindung ergibt.

Der Gegenstand der Erfindung gastattet es demagegenüber, die absolute Nullstellung eines Gelenksystems mit der Nullstellung eines elektrischen Wegemeßsystems auch nach Austausch von Getriebe- bzw. Wegemeß-System-Teilen genau in Einklang zu bringen, was insbesondere für den Einsatz von Industrie-Robotern von Wichtigkeit ist, um höchste Präzision in der Bearbeitung von Werkstücken zu erzielen.

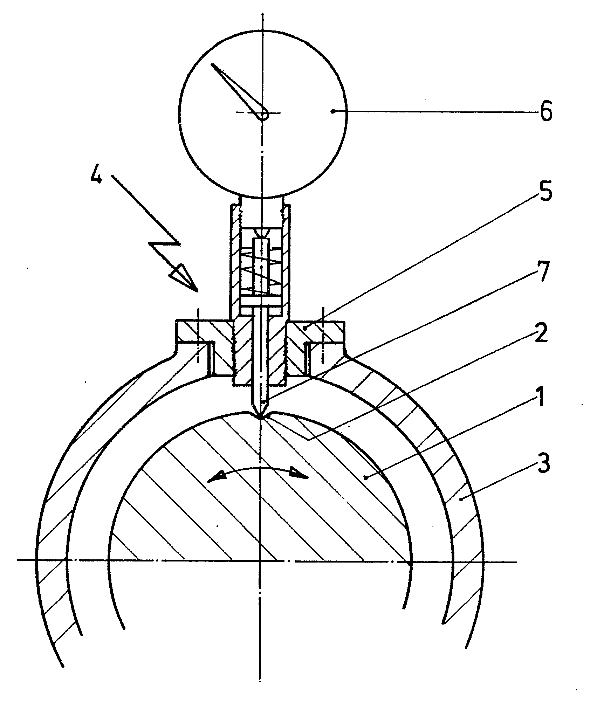

Die Erfindung wird im folgenden anhand der Zeichnung näher erläutert. Hierbei wird ein Ausführungsbeispiel im Sinne der Unteransprüche beschrieben.

In der Zeichnung ist eine sich drehende Welle 1 dargestellt, die der erfindungsgemäßen Lehre zufolge an der Oberfläche eine Kerbe 2 aufweist. Diese Kerbe liegt quer zur Drehrichtung der Welle.

Diese Welle dreht sich in einem stationären rohrförmigen Aufnahmeteil 3 und es ist zu einem Zeitpunkt x, in dem die Welle 1 und das Aufnahmeteil 3 zueinander in Wechselwirkung gebracht werden, die Aufgabe zu lösen, die genannten Teile in eine exakte und auch für Austauschteile reproduzierbare Korrelation zu bringen. Um dies zu erreichen, ist das Aufnahmeteil 3 mit einer Abtasteinheit 4 ausgestattet, die aus einer mit dem Aufnahmeteil 3 fest verbundenen Halterung 5 und einer in dieser einsetzbaren handelsüblichen Meßuhr 6 besteht. Diese Meßuhr besteht—wie allgemein bekannt—aus einem Skalenteil mit einem Zeiger, der mit einem federnd gelagerten Abtaststift 7 in Wirkverbindung steht.

Die Funktionsweise der erfindungsgemäßen Mittel ist die folgende:

Beim ersten Einstellungsvorgang überhaupt wird die Halterung 5 exakt ausgerichtet und fixiert, und zwar im Zusammenwirken mit der in eine bestimmte Zuordnung zu bringende Welle 1. Bei jedem späteren Austausch-bzw. Einstellvorgang wird die Welle 1 zunächst in etwa in Soll-Lage auf das Aufnahmeteil 3 eingeführt. In der Halterung 5 wird sodann die Meßuhr 6 eingeschraubt.

Daraufhin wird die unter dem Abtaststift 7 drehbare Welle 1 zwecks Aufsuchen des wirklich tiefsten Punktes der Kerbe 2 mehrmals hinund herbewegt. Der tiefste Punkt entspricht exakt der definierten Soll-Lage im Hinblick auf die Relativstellung der Welle 1 zum Aufnahmeteil 3.

Die erfindungsgemäße Konzeption ist verblüffend einfach und ermöglicht ein jederzeit reproduzierbares optimales Ergebnis ohne jegliches absolutes Messen. Es versteht sich von selbst, daß es im Hinblick auf die vorliegende Erfindung keinen Unterschied macht, ob die Welle mit einer abzutastenden Kerbe oder mit einer Erhöhung versehen ist, deren höchster Punkt dann der definierten Soll-Lage entspricht.

Es versteht sich auch von selbst, daß die vorliegen de Erfindung nicht auf Anwendungsfälle der beschriebenen Art beschränkt ist.

**Patentansprüche**

1. Vorrichtung zur exakten und wiederholbaren Einstellung eines motorisch angetriebenen Gelenksystems, dessen einzelnen beweglichen Gelenkteilen ein steuerbares elektrisches Wegemeßsystem zugeordnet ist, wobei die Zuordnung relativ zueinander beweglicher und zusammengehöriger Gelenkteile in ihrer mechanischen Nullstellung markiert und die Nullstellung des elektrischen Wegemeßsystems darauf abgestellt ist, insbesondere bei einem Industrieroboter oder Handhabungsgerät, dadurch gekennzeichnet, daß im beweglichen (1) von zwei zusammengehörigen Gelenkteilen (1, 3) eine Vertiefung oder Erhöhung (2) vorgesehen und im zugeordneten anderen Gelenkteil (3) eine Führung (5) für ein Feinmeß-Abtast-Instrument (6) verstellbar und fixierbar angeordnet ist, dessen Abtastelement (7) bei Relativbewegung beider Gelenkteil (1,3) durch Feststellung des Minimumsoder Maximums der Vertiefung bzw. Erhöhung (2) die mechanische Nullstellung anzeigt.

2. Vorrichtung nach Anspruch 1, dadurch gekennzeichnet, daß die Vertiefung oder Erhöhung (2) bei einer Welle als bewegliches Teil (1) sich in deren Oberfläche entlang einer Mantellinie erstreckt.

3. Vorrichtung nach Anspruch 1, dadurch gekennzeichnet, daß das Feinmeßinstrument (6) als Meßuhr ausgebildet ist.

**Claims**

1. A device for the exact and repeatable setting of a motor-driven articulated system with whose movable parts a controllable electrical path measuring system is associated, in which the association of articulated parts movable relative to one another and belonging together is marked at their mechanical zero position and the zero position of the electrical path measuring system is adapted according to this, in particular for an industrial robot or a handling apparatus, characterised in that an indentation or a raised part (2) is provided in the movable part (1) of two articulated parts (1, 3) belonging together and a guide (5) for a precision measuring-scanning instrument (6) is arranged adjustably and fixable in the associated other articulated part (3), the instrument (6) having a scanning element (7) which indicates the mechanical zero position during relative movement of the two articulated parts (1, 3) by detecting the depth of the indentation or the height of the raised part (2).

2. A device according to Claim 1, characterised in that where the movable part (1) is a shaft, the indentation or raised part (2) extends along a line in the surface of the shaft.

3. A device according to Claim 1, characterised in that the precision measuring instrument (6) is constructed as a dial gauge.

**Revendications**

1. Dispositif destiné à régler de manière exacte et reproductible un système articulé entraîné par un moteur, et aux différentes parties articulées duquel est associé un système électrique de mesure des trajets qui peut être commandé, la coordination des parties articulées mobiles les unes par rapport aux autres et associées entre elles étant marquée dans leur position de zéro mécanique et la position de zéro du système électrique de mesure des trajets étant réglée en conséquence, notamment pour un robot industriel ou un appareil manipulateur, caractérisé en ce que dans la partie (1) articulée mobile de deux parties (1, 3) articulées associées est prévue une dépression ou une saillie (2) et dans l'autre partie articulée (3) associée est montée de manière à pouvoir y être déplacé et à y être fixé un guidage (5) pour un instrument (6) de palpage et de mesure de précision, dont l'élément palpeur (7) indique, lors du mouvement relatif des deux parties (1, 3) articulées, la position du zéro mécanique en déterminant le minimum ou le maximum de la dépression ou de la saillie (2).

2. Dispositif suivant la revendication 1, caractérisé en ce que le dépression ou la saillie (2) s'étend, pour un arbre servant de partie (1) mobile, à la surface de celui-ci le long d'une génératrice.

3. Dispositif suivant la revendication 1, caractérisé en ce que l'instrument (6) de mesure de précision est un comparateur à cadran.